Europäisches Patentamt

European Patent Office

Office européen des brevets

(11) Publication number: **0 317 675 B1**

# EUROPEAN PATENT SPECIFICATION

(45) Date of publication of patent specification: **17.06.92**  (51) Int. Cl.⁵: **B65D 3/22**, B32B 7/02

(21) Application number: **87310415.2**

(22) Date of filing: **25.11.87**

(54) **Carbonated beverage can for carbonated beverages.**

(43) Date of publication of application:
**31.05.89 Bulletin  89/22**

(45) Publication of the grant of the patent:
**17.06.92 Bulletin  92/25**

(84) Designated Contracting States:
**AT BE CH DE ES FR GB GR IT LI LU NL SE**

(56) References cited:
**EP-A- 0 163 492**
**AU-A- 501 864**
**DE-A- 2 518 341**

(73) Proprietor: **SHELL INTERNATIONALE RE-
SEARCH MAATSCHAPPIJ B.V.**
**Carel van Bylandtlaan 30**
**NL-2596 HR Den Haag(NL)**

(72) Inventor: **Michaels, Nicholas**
**12439 Honeywood Trail**
**Houston Texas 77042(US)**
Inventor: **Korcz, William H.**
**11201 Olympia Drive Apt. No. 2708**
**Houston Texas 77042(US)**
Inventor: **Campbell, Neil**
**2909 Hackberry Lane**
**Katy Texas 77749(US)**
Inventor: **Singhal, Surendra N.**
**7416 S. 68th East Avenue**
**Tulsa Oklahoma(US)**

# EP 0 317 675 B1

**Description**

This invention relates to a beverag can for carbonated beverages according to the preamble of claim 1. Such a beverage can is known from EP-A-0 163 492.

US-A-4,379,014 discloses a method for the manufacture of containers. A container body is manufactured by spiral winding of a monoaxially molecular-oriented polyester film. A polyester strip which is monoaxially molecular oriented in the strip direction is coated with a layer of non-molecular oriented amorphous polyester material. The coating layers may be polyethylene but it is stated that sometimes the polyethylene materials do not give good sealant strength or the overlapped joint that the material requires is too wide. This results in a lack of good adhesion and, as a result, the coating material may need to be a modified polyester (PETG). EP-A-0163492 discloses similar container cans in which the spirally wound film is a crystalline high mol. wt. polymer, and which may also comprise a barrier material and attached can ends. In both such prior art cans, a single spiral winding is wrapped around the container body in only one direction.

US-A-4,181,239 discloses a cylindrical container body for packaging pressurized carbonated beverages requiring at least two layers of a polyester film.

US-A-4,451,524 discloses a polypropylene strap for use in packaging articles. The polypropylene strap does not require subjection to a surface embossing process to prevent it from being longitudinally split and in addition has a tensile strength higher than that of conventional polypropylene strap and good elongation resistance, high rigidity and is flexible. This patent does not address the problems inherent in a pressurized container, such as a carbonated beverage container, such as the necessity for sufficient volume swell resistance in both hoop and axial directions.

Numerous factors govern the requirements for a beverage container. For example, with soft drink beverages, (1) container vendability in coin operated machines is a key requirement. A standard can (0.36 litre or 12 U.S. fluid ounces) must fit into and dispense from the many existing vending machines. The overall outside dimensions of any standard can are constrained, limited and fixed to those ordinarily found for the aluminum and steel cans for which the vending machines have been designed to accept and to vend. Also, the beverage capacity in the can is fixed. Therefore, the can diameter, can height and can wall thickness must be designed in concert to satisfy standard can vendability requirements.

Another key factor is (2) consistency of dimensions under conditions of storage, be it in a warehouse, on a delivery truck or on a supermarket shelf. A carbonated beverage can is a pressure vessel. Typical soft drink beverages will have an internal pressure of about 0.38 MPa gauge (55 psig) once the beverage is filled with four volumes of $CO_2$ gas, sealed with an end or lid and then brought to room temperature. With temperatures rising much above 40°C (105°F), internal pressures of about 0.6 MPa gauge (87 psig) are achieved as the $CO_2$ gas expands and exerts a higher internal pressure as it warms. This is the pressure at which a conventional easy-open metal end on a metal can will buckle. Below this temperature and pressure, the can sidewall material must not appreciably creep, deform or grow in size to an unacceptable level. The can body must not split, twist, torque or otherwise fail up to this lid buckling pressure. It is known that for a cylindrical shell or a cylindrical can body, hoop direction pressure-induced stress in the can body sidewall is twice as large as the axial direction pressure-induced stress in the can body sidewall. With metal cans for carbonated beverages the can body material is necessarily homogeneous and monolayer, i.e. it consists of a uniform gauge and thickness material of singular components, e.g. thin aluminum or thin steel sidewall material. In such monolayer, homogeneous material containers, including homogeneous, monolayer plastic containers, the can sidewall must necessarily be engineered so that the more severe design criterion -- the hoop stress -- is satisfied. Therefore, monolayer, homogeneous can bodies have been limited to always satisfying the more severe hoop stress requirement while being over engineered (by default) in satisfying the less demanding criterion, the axial stress requirement.

A container for which the can body sidewall materials and method of layered construction provide a disproportionation of stress resisting properties such that the 2:1 hoop stress to axial stress forces in a cylindrical can body geometry are better satisfied, has been long needed in the industry.

Can performance, that is, satisfactory sidewall resistance to the stresses created by the internal pressure of the carbonation, is largely governed by key can wall material properties; namely (1) elastic modulus, (2) initial tensile yield strength; and (3) creep resistance. Ultimate breaking strength or ultimate breaking elongation are of little consequence. The elastic modulus of the sidewall material must be high so that the sidewall stresses (these stresses are a function of sidewall thickness, pressurization level and can diameter (for hoop stress)) are resisted and little strain (deformation) occurs. The properties of high modulus and high yield strength in combination are the key to providing the thinnest wall possible.

According to the invention there is provided a beverage can for carbonated beverages which comprises

2

a can body no more than 2 mm (80 mils) thick comprising a core of a thermoplastic material (1), at least one layer of barrier material, and bonded thereto a first layer (2) of a film or sheet of a polyolefin material which has been monoaxially or biaxially stretched to a tensile yield strength of at least 55 MPa (8000 psi) in a given direction and elastic modulus of at least 2760 MPa (400,000 psi) in a given direction, said layer being wrapped around said core at a positive angle relative to the longitudinal axis of said core, and can ends attached to said can body, characterised in that the can body comprises at least one further layer (3) of stretched polyolefin material which is wrapped around said core at a substantially corresponding negative angle.

Thus it has been discovered that a polyolefin, and most particularly polypropylene, can be used to manufacture a thin wall beverage can, and that the use of a polyolefin when oriented to a degree which assures high modulus and high initial tensile yield strength (for example, when compared to the modulus and initial tensile yield strength values for polyester such as polyethylene terephthalate (PET) or oriented PET), allows for thin-walled beverage containers. This results in less use of thermoplastic materials in making the can and thus greater efficiency in its manufacture. By "thin-wall", we mean a wall thickness of no more than 2 mm (80 mils), preferably less than 1.3 mm (50 mils), and most preferably less than 0.8 mm (30 mils).

The necessity for thin wall has been discussed. Other crucial factors, such as end and top seaming of end closures, faster beverage cooling, minimization of the number of layers to be wrapped to facilitate manufacturing, the lessening of the number of adhesive layers necessary to bond wound layers in the construction, and lighter weight depend upon achieving the thinnest wall possible as provided in accordance with the invention.

Heretofore, unoriented polypropylene films and sheet have been used for various other applications but have low modulus, low initial tensile yield strength and poor creep. As such, these films and sheet are unacceptable to make thin-walled carbonated beverage cans as modulus values of the unoriented films are from 2.5 to 5 times too low, and initial tensile yield values are 3 to 4 times too low. Furthermore, high quality biaxially oriented polypropylene film, for example Hercules T-503 film, while having a high modulus, shows unacceptable initial tensile yield values, about 2 times too low. Monoaxially oriented polypropylene manufactured for strapping tape shows good modulus and initial tensile yield strength, but is much too thick to achieve a thin wall beverage can construction. Further, strapping tape is only available in relatively narrow widths.

Two proprietary technologies have been developed in oriented polypropylene film or sheet materials that overcome these past deficiencies, i.e. offer a combination of high modulus and high tensile yield strength with improved creep properties, and also have film or sheet widths which are satisfactory to practise the instant invention. Further, through these development efforts in this field, film or sheet material of oriented polypropylene with properties superior to oriented PET film or oriented PET blown beverage bottle materials have been developed. Prior to these developments, thin wall polyolefin cans suitable for carbonated beverages were not possible. Heretofore, many different composite cans have been made, such as cans for motor oil or food products. Howver, these composite cans are not manufactured to withstand internal pressure as found in a can used for carbonated beverages.

We have discovered that cross plying of such high strength polyolefin film materials at plus-minus angles to one another not only circumvents the deficiencies found in the past containers, but also affords a means by which the hoop and axial stresses can be accommodated at the 2:1 relative ratio, making possible a thin-walled beverage can. The can of the invention has good strength and volume swell resistance in both the hoop and axial directions. The use of the polyolefin results in acceptable modulus, creep and yield strength values and better modulus and yield strength values than commercially available PET or other polyester containers. The higher the modulus, the thinner the can wall can be made for end seaming. This results in less use of thermoplastic materials in making the can and thus greater efficiency in the manufacture of the can.

The higher the modulus, the thinner the can wall that can be made and thus the more easily an end for example of aluminum, could be attached to the can body. A standard aluminum end or top may be attached to can walls having a thickness of as little as 0.8 mm (30 mils).

We have discovered that unidirectional wrapping leads to undesirable torquing and twisting of a can body in response to the unbalanced hoop and axial stresses in the can with pressurization, and that overcoming these unbalanced stresses by wrapping sufficient extra layers of material in one direction precludes the achievement of thin wall body material. Torquing and twisting is unacceptable from a graphics/aesthetic point of view for a decorated can.

The invention will be described in more detail by reference to the accompanying drawings in which:

Figure 1 is a graph of the pressure in a standard (0.36 litre or 12 U.S. fluid 12 ounce) beverage can versus temperature.

Figure 2 is a graph of hoop stress versus wall thickness for various internal pressures in a standard beverage can.

Figure 3 is a graph of yield stress versus deformation for representative materials above and below a reference hoop sress (SH).

Figure 4 is a graph of hoop stress and yield stress against deformation as the can body wall is made thinner.

Figure 5 is a graph of volume swell versus wall thickness for various wall materials of different moduli in a standard beverage can.

Figure 6 is a graph of stress versus strain (deformation) for reference materials above and below a reerence hoop stress (SH) and reference modulus (M).

Figure 7 is a graph of stress versus strain for various can materials.

Figure 8 is a graph of room temperature creep strain at 70 MPa (10,000 psi) against time for unoriented polypropylene, oriented polypropylene, creep resistant biaxially oriented polypropylene, monoaxially oriented polypropylene with a cap adhesive layer, and oriented PET film.

Figure 9 is an illustration of stress resistance vectors for various constructions of a beverage can body.

Figure 10 shows resultant hoop and axial stress resistance vectors for wrapped constructions where one highly monoaxially oriented layer is applied at various unidirectional angles.

Figure 11 shows resultant stress resistance vectors for layered constructions where highly monoaxially oriented layers are applied at angles opposite (plus and minus) one another as compared to examples of undirectional wrapped constructions.

Figure 12 shows the volume percent growth for high modulus low yield strength biaxially oriented polypropylene materials wrapped convolutely onto a polypropylene core.

Figure 13 shows the volume percent growth or improved creep resistant, high yield strength biaxially oriented polypropylene as a function of wrapping angle and as a function of plus/minus ply layer wrapping versus unidirectional wrapping.

Figure 14 shows the rotational angle of twist found for a unidirectional wrapped body configuration.

Figure 15 shows volume swell test results for various monoaxially oriented polypropylene strength wrap materials.

Figure 16 shows summary of results for Figures 12, 13 and 15 where convolute wrap low yield strength biaxially oriented polypropylene film which has been cross-plied at 70 and 55 plus/minus angles are compared for volume swell.

Figure 17 illustrates a can body with a core material and two layers of strength wrap material.

Figure 18 is a schematic diagram illustrating the continuous manufacture of can bodies, including extrusion of a core followed by wrapping of separate layers in a plus/minus configuration.

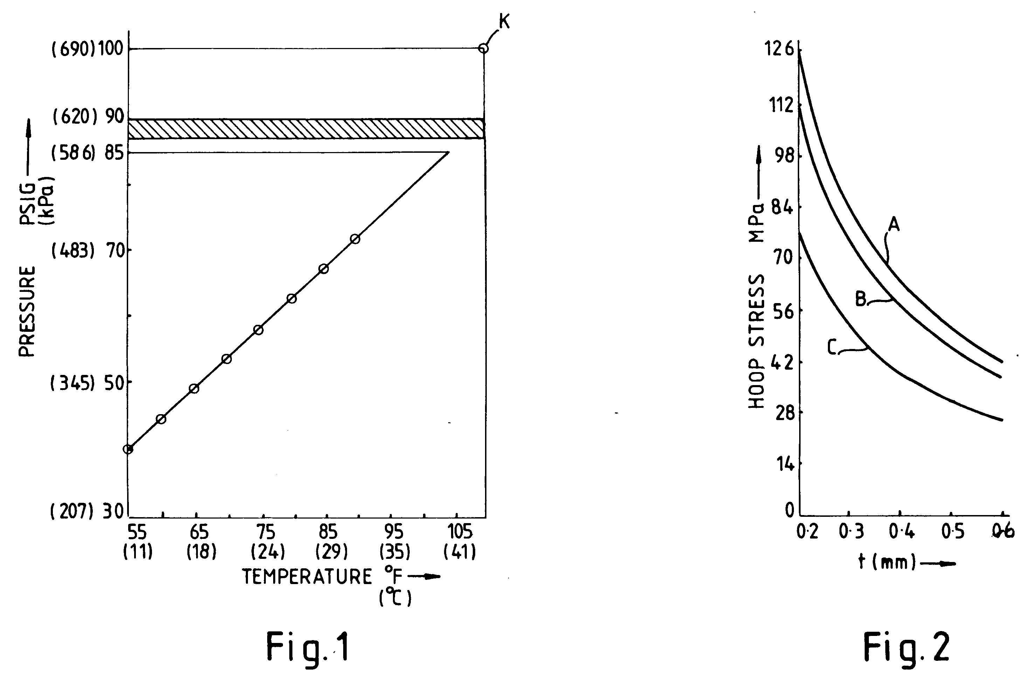

Figure 1 displays the combinations of pressures and temperatures typically found in a standard (0.36 litre or 12 U.S. fluid ounce) soft drink beverage can. The plotted line represents the pressure in a standard can that contains a sugar product soft drink having a carbonation level of four volumes of carbon dioxide. The shaded area at 610 to 620 kPa (87 to 90 psig) is the pressure at which a typical easy-open aluminum pull tab lid will buckle from internal pressure. This critical pressure, and the temperature at which the internal pressure in a standard can containing the soft drink reaches the critical pressure determine the upper boundary conditions that must be satisfied in designing the can body to resist pressure (586 KPa gauge and 41°C or 85 psig, 105°F).

Also shown on this plot is a point, "K", at 690 KPa gauge and 43°C (100 psig and 110°F). This set of conditions, clearly more severe than those at which the top lid will buckle and fail, have been used to evaluate various wrapped can body constructions for volume swell, torquing and twisting, splitting and other functional performance factors.

Figure 2 shows how these internal pressures in the can cause a corresponding stress in the can sidewall. This stress, in this case the hoop stress, is calculated on the basis of the geometry of the cylindrical shell can body with the radius of the can (r) and can body wall thickness of the can (t) in combination with the internal pressure (pa) governing the circumferential (hoop) stress. This hoop stress

$$\left(\text{hoop stress} = \frac{pa \ x \ r}{t}\right)$$

is found on the vertical axis.

For a standard can, the radius is approximately 3.3 cm (1.3 inch). Various can body wall thicknesses are shown on the horizontal axis. Thus, for any given pressure and can body wall thickness a corresponding hoop stress can be calculated once the can radius is fixed.

This calculated hoop stress becomes an important design criteria in achieving a thin wall can body. As can be seen from the plots in Fig 2 for various internal pressures (curve A at 0.7 MPa gauge (100 psig), curve B at 0.61 MPa gauge (87 psig) and curve C at 0.38 MPa gauge (55 psig), the thinner is the can body wall, the greater is the hoop stress in the can body wall. Clearly, the can wall material must be able to resist the hoop stress found in order not to appreciably deform, stretch or creep, which would lead to unacceptable volume swell, splitting or catastrophic failure due to these processes.

The important can body wall material property that governs resistance to hoop stress forces is the tensile yield strength. The tensile yield strength of a material is the break point on the tensile stress/strain curve. Below the tensile yield point, little stretch deformation of the material is shown as stress is applied. Above the tensile yield point, considerable stretch deformation of the material is shown as the material easily yields, and permanently deforms without much resistance to stress. Thus, in making a thin walled can body, it is crucial that tensile yield properties of the can body wall material are such that the hoop stress in the can body sidewall is resisted, precluding appreciable stretch deformation of the can wall material.

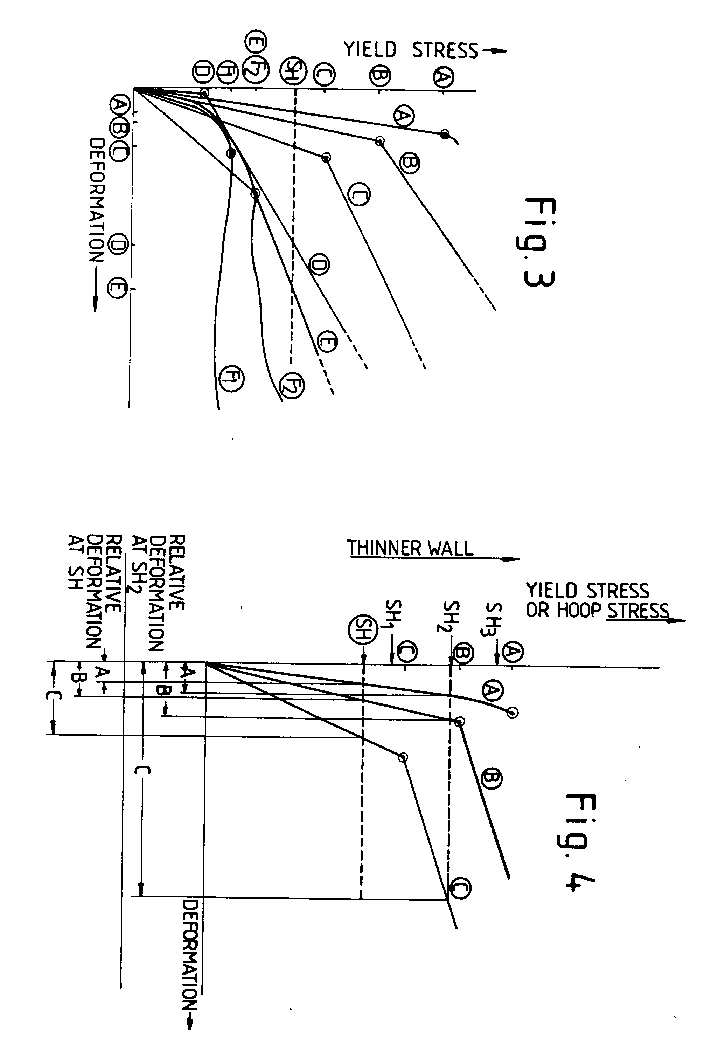

Figure 3 is a representation of these principles for various representative materials. The tensile yield stress for various materials is shown on the vertical axis; corresponding deformation (stretch, strain) is shown on the horizontal axis. A reference hoop stress (SH) as a function of a given can body wall thickness, radius and pressure, is chosen as a point at which these examples may be compared.

Curves A, B and C have tensile srength values (indicated by the circled point) above the dotted line indicating the reference hoop stress (SH). These materials show little deformation at the reference hoop stress level. Curves D and E show tensile yield strength values below the reference hoop stress and correspondingly show significant deformation at the reference hoop stress. Curves $F_1$ and $F_2$ show tensile yield strength values below the reference hoop stress with tensile break strength values below the hoop stress as well. These materials will continue to deform until they fail by splitting or bursting when the reference hoop stress is found inside the container.

One key criterion, then, to producing a thin walled vessel is high tensile yield strength of the can body wall material. This is shown illustratively in Figure 4. Curves A, B, C are repeated as shown in Figure 3. Along the vertical axis we show the reference hoop stress (SH) at thickness = X as shown in Figure 3. As the can body wall is made thinner, the hoop stress in the can body sidewall becomes increasingly higher, represented now by the vertical axis intercepts labeled $SH_1$, $SH_2$ and $SH_3$ at $X_1$, $X_2$ and $X_3$ wall thicknesses where $X_3 < X_2 < X_1 < X$. It is clear that the achievement of a thinner wall can body depends upon high tensile yield strength of the can body material in order to minimize deformation of the can wall when hoop stress increases as a function of decreasing wall thickness. For example, at $SH_2$ at thickness $X_2$, materials A and B will show much less deformation than material C. $SH_2$ is above the tensile yield strength of material C, thus a can body wall at thickness $X_2$ with material C will show a rather large deformation. Further, where X is the maximum allowable thickness for reasons of end seaming, light weighting, faster chilling of the can body, then materials represented by curves A, B, C will meet the criteria of tensile yield strength > hoop stress at thickness X < maximum allowable thickness for reasons of end seaming, light weighting, faster chilling, etc. of the can body. Other materials as previously shown in Figure 3 (curves D,E,F, $F_2$) will deform too severely at thickness X, and will not meet these criteria.

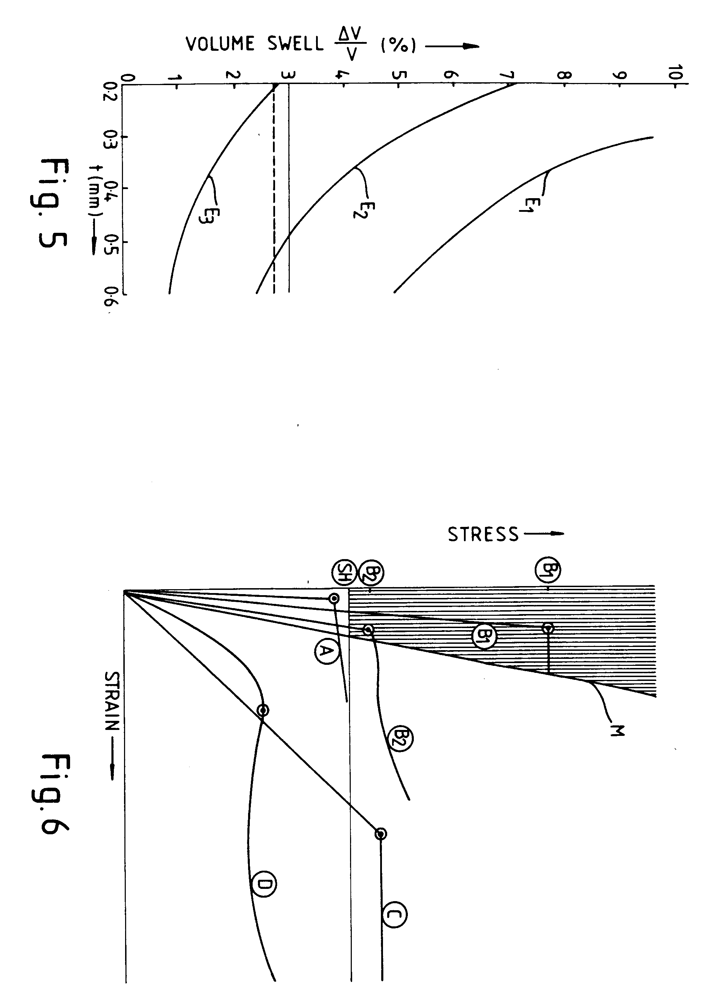

Figure 5 presents treatment of a second major criterion for achievement of a thin wall can body beverage can. In this figure, $\Delta V/V$, volume swell percent, is shown as a function can sidewall thickness for a standard beverage can where the internal pressure is 0.7 MPa gauge (100 psig). The three curves shown represent the elastic modulus, E, of the can body sidewall material. ($E_1$ a modulus of 1380 MPa (200 kpsi), $E_2$ a modulus of 2760 MPa (400 kpsi) and $E_3$ a modulus of 6900 MPa (1000 kpsi). Clearly, higher elastic modulus materials are preferred in order to minimize volume swell at thin can body sidewalls. For example, if we construct a horizontal line parallel to the horizontal axis at about 3% volume swell, we find that about 0.53 mm (21 mils) of 2760 MPa (400 kpsi) elastic modulus material is equivalent to about 0.2 mm (8 mils) of 6900 MPa (1000 kpsi) elastic modulus material to satisfy a volume swell of less than 3%.

The importance of fulfilling both criteria , high tensile yield strength and high elastic modulus, is illustrated by Figure 6. The elastic modulus of a material is the measure of its ability to resist deformation under load up to a strain point at which permanent deformation (non-elastic, non-recoverable deformation) occurs. For plastics materials, as compared with metals, ceramics or thermosets, it is generally measured in the very early portion of a tensile stress/strain curve. The magnitude of the elastic modulus is the slope of the initial elastic deformation portion of the stress/strain curve. For materials having very high modulus, high stress causes very little strain (deformation). Low modulus materials, such as rubbery materials, show very low modulus, i.e. deform significantly under low stress.

In the context of a pressure vessel, in particular, a beverage can, the deforming stresses are a constant load. Materials having very high modulus will deform less significantly under this constant load. Therefore, volume swell of the can body will be minimized. However, this high elastic modulus is insufficient in itself to provide a thin-walled beverage container. The tensile yield strength must also be sufficiently high in combination with high modulus in order to achieve a thin-walled vessel.

Figure 6 is a summary of the stress/strain properties of representative materials in terms of a minimum modulus (M) at a given thickness (X) and tensile yield strength (circled point). The acceptability of the various materials with respect to satisfying both the minimum elastic modulus criterion and the tensile yield strength criterion simultaneously can be summarised as follows:-

|  | A | $B_1$ | $B_2$ | C | D |
|---|---|---|---|---|---|
| Tensile yield strength > SH | No | Yes | Yes | Yes | No |
| Elastic modulus > M | | Yes | Yes | Yes | No | No |

The hatched areas of Fig 6 shows the region of properties necessary in order to achieve thin wall can bodies. One object of the present invention is in meeting both criteria to achieve a thin wall can body with polyolefin polymers, polypropylene in particular. Heretofore, such a necessary combination of high modulus and high tensile yield strength precluded the use of unoriented polyolefins to make thin wall can bodies.

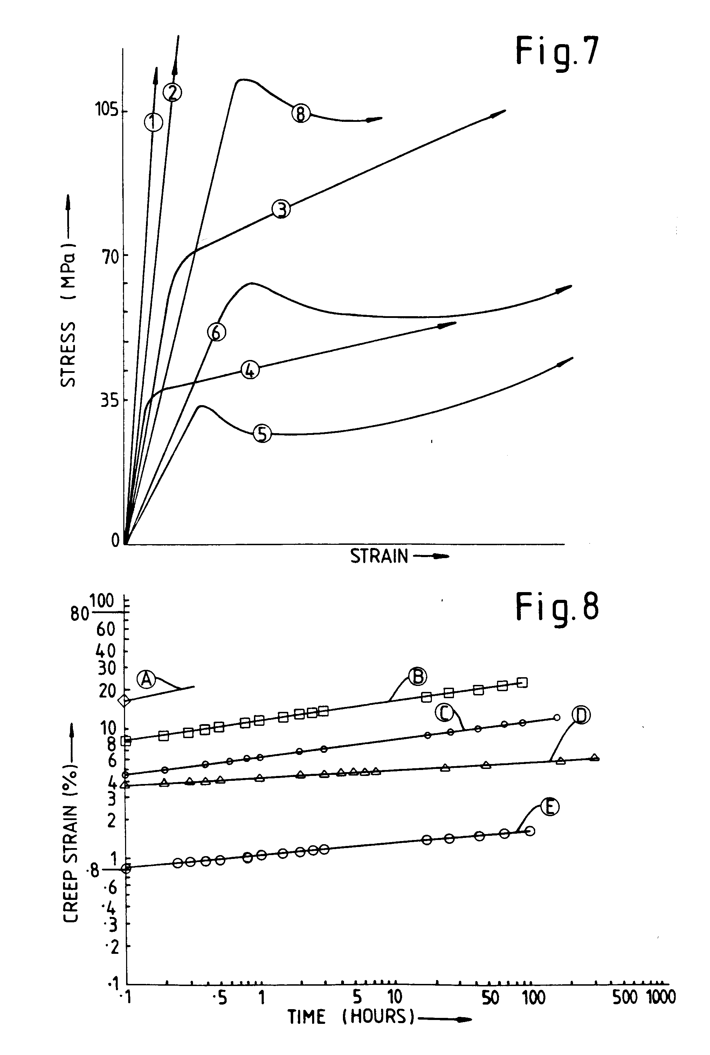

Figure 7 and Table 1 below summarises measured stress/strain properties for highly oriented polypropylene film and sheet that can be used to provide beverge cans in accordance with the invention versus other polypropylenes and polyesters in thin gauge sheet or film suitable for wrapping. The numbers of the curves in Fig 7 are keyed to the entries in Table 1. Table 1 also summarises the elastic modulus and yield strength for different materials.

Figure 8 is a graph of room temperature creep at 70 MPa (10,000 psi) stress over a period of time of up to 300 hours, for unoriented polypropylene (curve A), oriented polypropylene (curve B), creep resistant biaxially oriented polypropylene (curve c), monoaxially oriented polypropylene with a cap adhesive layer (curve D) and oriented PET (curve E) film. As can be seen, a monoaxial oriented polypropylene with a cap adhesive layer ranges from $3\frac{1}{2}$ to 6 percent at 0 hours and 300 hours respectively.

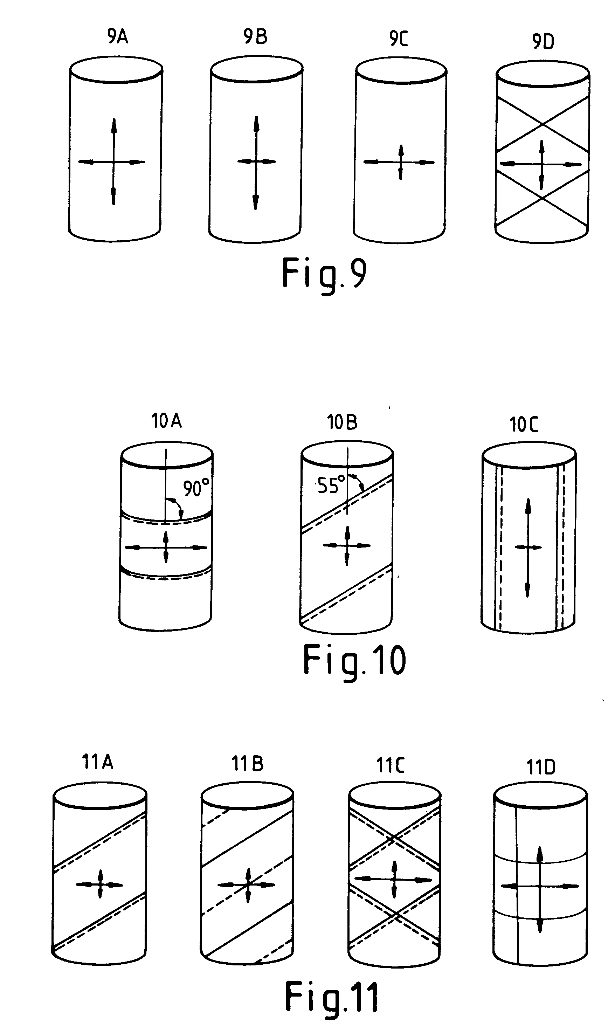

Figure 9 shows stress resistance vectors for various constructions of a beverage can body.

Case 9A shows stress resistance vectors which are equal to each other as is the case for homogeneous materials. Example materials are steel, aluminum, injection molded or wrapped film beverage cans. Homogeneous property materials provide no opportunity to balance the stress resistance vectors to optimize the hoop performance versus the axial performance. Thus, a larger than necessary stress resistance vector in the axial direction results. This results in the requirement of thicker walls of homogeneous materials.

Case 9B shows the stress resistance vectors for an unbalanced axial resistant can. Examples are thermoformed plastic or D&I (drawn and ironed) plastic cans. The primary stress resistant vector is in the axial direction due to thermoforming and orientation of plastic in the axial direction. Thus, a thicker wall must be used to overcome the hoop stress resistance deficiency. Axial and hoop properties are as shown in Table 1, item 7, types A, B, C for case 9B cans.

Case 9C shows unbalanced radial and axial stress resistance vectors for a can wall material with anisotropic properties made by convolute wrapping. For a convolute wrapped can, the magnitude of these stress resistance vectors depends upon the exact can wall material properties in either direction, and continuous manufacture of endless can body lengths is not possible. Convolute wrapping of materials with isotropic properties, i.e. equal in both directions, reverts to case 9A.

Case 9D shows balanced stress resistant vectors for a can constructed in accordance with the present invention. The film or sheet is wrapped at plus and minus angles. This satisfies the bidirectional and unbalanced hoop and axial stress resistance with a stress resistance ratio in the hoop to axial direction of 2:1. This is optimum for this particular application. This results in a optimized use of materials to meet stresses while having a reduced wall thickness.

Figure 10 shows resultant hoop and axial stress vectors for wrapped constructions where a highly monoaxially oriented layer or layer is/are applied at various unidirectional angles (i.e. not the invention).

Case 10A shows one film layer being used to wrap the core at a film wrap angle of plus 90 degrees from a center perpendicular axis through the can. This type of wrap angle does not allow one to continuously manufacture a can and results in unsatisfactory axial stress resistance. Thus, a thicker container wall must be used.

Case 10B shows wrapping of one film layer at a plus 55 degrees film wrap angle to the axis of the core. The hoop stress resistance vector shortens as the wrap angle changes and the axial stress resistance vector increases. Now, as compared to Case 10A, the hoop stress resistance vector must be satisfied by use of thicker wall material.

Case 10C shows one film layer wrapped to a 0 degree angle on the core. The axial stress resistance vector, as may be expected, is at its maximum but the hoop stress resistance vector has been lost. Thus, the hoop stress resistance vector must be satisfied in much thicker wall material.

Figure 11 compares resultant stress resistance vectors for layered constructions where highly monoaxially oriented layers are applied unidirectionally or in crossplied directions.

Cases 11A shows one film layer wrapped at a plus 55 degree angle to the axis of the core. The hoop and axial stress resistant factors are unbalanced and insufficient to meet the hoop and axial design stress at a thickness of T/2. Also, torquing, twisting and splitting results when the can is pressurized. Thus, such a can would fail when used with carbonated beverages.

Case 11B shows two film layers, both of which are wrapped at plus 55 degree angles to the axis of the core. The axial stress resistant factors here are improved, but are still insufficient to meet the hoop and axial design stress at wall thickness equals T. Torquing, twisting and splitting result when the can is pressurized. As a result, the can fails when used with pressurized carbonated beverages. If T, thickness, is equal to the maximum thickness constraint of the can, then a unidirectional wrap design will not satisfy the beverage can needs.

Case 11C shows two film layers which are wrapped at plus/minus degree angles to each other (our invention). The hoop and axial stress resistance factors are balanced and are sufficient to meet the hoop and axial design stress at wall thickness equal T. No torquing, twisting or splitting takes place when the can is pressurized. The can meets thickness constraints as well as performance constraints.

Case 11D shows two film layers which are wrapped at 0 degrees and 90 degree angles to the axis of the core. This results in inefficient hoop and axial stress vectors at ratios of 1:1 (as in Case 9A). it is also not possible for this can to be continuously manufactured due to the wrapping constraints at a 90 degree angle.

Thus, only Case 11C illustrates the hoop and axial stress resistant factors which work for a beverage can which will withstand pressurization conditions of use, as with carbonated beverages, with a minimum wall thickness. The two film layers are wrapped at plus/minus angles to each other although they need not be 55 degree angles. A monoaxially stretched film is preferably wrapped at an angle between 50 and 60 degrees to the core axis and most preferably at about 55 degrees. Biaxially stretched film layers are preferably wrapped at an angle between 60 and 80 degrees to the core axis and most preferably at about 70 degrees.

## TABLE 1

| Material Description | | Elastic Modulus (kpsi)MPa | Yield Strength (kpsi)MPa |
|---|---|---|---|
| **Polyolefins** | | | |
| *1. Highly oriented, mono-axial oriented poly-propylene; no adhesive cap layer | MD TD | (1,610)11100 Splitty | (>68)>470 Splitty |
| *2. Highly oriented, mono-axial oriented polypropylene; with adhesive cap layer | MD TD(est.) | (1,480)10200 (271)1870 | (>60)>414 (11.(est.)) |
| *3. Improved creep resistant biaxially oriented poly-propylene | MD TD | (400-600)2800-4100 (240-400)1700-2800 | (8-12)55-83 (5-6)34-41 |
| 4. Biaxially oriented poly-propylene very high modulus T-503 (Hercules) | MD TD | (505)3490 (1,160)8000 | (4.9)34 (5.9)41 |
| 5. Unoriented polypropylene homopolymer | | (200)1400 | (4.8)33 |
| **PETS** | | | |
| 6. Unoriented PET | | (140-230)965-1590 | (8.0)55 |
| 7. Thermoformed PET Type A | Axial Hoop | (460)3200 (266)1830 | (12.0)83 (10.0)69 |
| Type B | Axial Hoop | (711)4900 (260)1800 | (21.0)145 (8.8)61 |
| Type C | Axial Hoop | (851)5870 (259)1790 | (23.0)159 (9.7)67 |
| 8. OPET biaxially oriented film | MD/TD | (500)3450 | (15.21)104.9 |

*present invention

The three materials asterisked (*) represent the materials which are suitable for use in constructing beverage cans in accordance with the present invention. As 30 may be seen, material No. 4 has an elastic modulus greater than the required 2760 MPa (400,000 psi) but does not have the 55 MPa (8,000 psi) yield strength required. Material No. 5 does not meet either requirement.

Material No 6 barely meets the yield strength requirement but does not have a great enough elastic modulus. Material No 7 does not meet the modulus requirements in both the hoop and axial directions, as is required. Material No 8 meets the yield strength requirements and the elastic modulus requirements but is a PET film.

In addition to high modulus and high tensile yield strength longer term resistance to deformation under stress (creep) is also an important consideration for a container body material wherein carbonated beverage contents produce a static pressure. Figure 8 compares this creep behavior of various materials under 7 MPa (10,000 psi) stress. Examples C and D correspond to materials 2 and 3 in Figures 7 and Table 1. When compared with unoriented polypropylene, 15 example A, or state of art BOPP, example B, materials C and D having high modulus and high tensile yield strength show significant improvement in resistance to long term static loaded deformation at 7 MPa (10,000 psi). THis is also important in minimizing the long term volume swell of a beverage can when thin wall can body materials are used. Creep properties for OPET film are also shown for reference.

We have discovered that polyolefin film or sheet materials, said film or sheet oriented either monoaxially or biaxially to achieve a combination of high modulus, high tensile yield strength and improved creep resistance, preferably oriented monoaxially, can be used to provide thin wall can bodies that resist hoop stresses and minimize volume swell, such thin wall structure having been previously unattainable with polyolefin materials.

Initially, a core is produced by first making a core of any thermoplastic material such as a polyolefin. Preferably polypropylene or more preferably, extruded polypropylene or co-extruded polypropylene layer, tie layer, and barrier layer are used to make the core. For example, in the preferred embodiment, the core would be made by extruding polypropylene or perhaps a polypropylene/tie layer/barrier layer/tie layer/polypropylene layer into a tubular core which then may be used to produce the can body by methods such as winding film around the core supported on a mandrel and subjecting it to heat to hold the film together. Alternatively, pressure sensitive film can be wound and will adhere without heat activation or heat bonding.

In the case of the coextrusion, a tie layer such as "Admer", available from Mitsui of Japan, "Modic", available from Mitsubishi of Japan, or "Plexar", available from Norchem, or "CXA", available from DuPont, may be used, although a tie layer is certainly not limited to these materials. ("Admer", "Modic", "Plexar" and "CXA" are Registered Trade Marks.) The tie layer merely needs to be type of adhesive which will bond layered structures such as polypropylene/tie layer/barrier layer/tie layer/polypropylene together.

The barrier layer may be an ethylene vinyl alcohol copolymer (such as "EVAL" (RTM) available from Evalca) or a vinylidene fluoride polymer (such as "SARAN" (RTM) available from Dow Chemical), although the barrier layer is not necessarily limited to these two materials.

Film layers of polyolefin are produced and are stretched (oriented) in one or two directions. If the film is stretched in only one direction, it is referred to as monoaxially oriented film. If the film is stretched in two directions, then the film is referred to as biaxially oriented film. The film is slit into appropriate widths and then at lest two film layers of the polyolefin are wrapped around the core at an angle (plus and minus) to the core axis to yield sufficient strength and volume swell resistance in both hoop and axial directions.

Preferably, said layers have been biaxially stretched and are wrapped around the core at positive and negative angles between 60 degrees and 80 degrees to the core axis, or said layers have been monoaxially stretched and are wrapped around the core at positive and negative angles between 50 degrees and 60 degrees to the core axis.

An adhesive may be used between the core and the film layers in order to bond the film layers to the core and between the film layers themselves so as to bond the film layers together. The adhesive may be, for example, a "Kraton" (RTM) elastomer available from Shell Oil Company, PVDC (polyvinylidine chloride, available from Dow Chemical Company), a polybutene-1, a butene-1 copolymer, or a polybutene-1/polypropylene blend, available from Shell Oil Company. Most preferably, the adhesive is in the form of a polybutene-1 "cap" layer which is bonded to at least one side of a film layer by some method such as coextrusion or hot lamination. The polybutene-1 acts as a "cap" layer and will soften when activated with heat or friction, and thereby provides an adhesive for bonding the polyolefin film or films with themselves as well as with the core. The adhesive may be heat activated or may be pressure sensitive.

At least one layer of barrier material is contained within the can body. It can be present in the core, between the core and the film layers of polyolefin or within the film layers. The barrier material may, for example, be EVOH or Saran,. The barrier layer is preferably coextruded as part of the core when the core is made up of, preferably, a polyolefin, and most preferably, a coextruded polypropylene layer, with a tie layer (Admer, Modic, Plexar or CXA as previously discussed) and a barrier layer. The barrier layer may be coextruded or may be applied as a coating or a film, or may be included in the can by some other means.

The core wrapped with the polyolefin films is referred to as the "can body". Ends are attached to the can body by any suitable method. Aluminum ends can be double-seamed or barrier sheet formed ends (PP/tie layer/barrier/tie layer/PP) can be spin welded. A tape-type easy open feature can be used as can any other suitable ends for attachment. A bottle neck can be spin welded or attached by some other suitable means to the can body. If an aluminum appearance is desired, the film can be metallized to give additional barrier properties and good graphics. The ends may be either metal or plastics or some other suitable material. For example, the ends could be made of composites which are made of both metal and plastics. The composite can be in the form of a plastic/metal/plastic laminated composite or a metal sealing ring round a plastic disk. The latter type of end can be made by insert injection molding. The sealing of the ends to the can body can be done by mechanical means, for example by single seaming, double seaming or a welding process, such as spin welding or induction heating. Or, both a mechanical and a welding process can be used together.

In addition, layers of non-plastics, such as aluminum, steel or paper may be added when making the can.

The next group of Figures show results for pressure tested can bodies made according to the present invention. Comparisons are made with prior art films and prior art wrapping approaches.

Experiment I

Test specimens were fabricated by first extruding a polypropylene core about 6.6 cm (2.6 inches) in diameter having a cylinder wall thickness of about 0.33 mm (13 mils). Pressure sensitive adhesive was used to bond the wrapped film or sheet layers to this core surface and to one another. Specimens 20 to 25 cm (8 to 10 inches) in length were cut from the wrapped corestock, then clamped and sealed onto metal end plugs. One end plug is suitable for connection to a pressure source. Specimens and end plugs were then immersed in a water bath at test temperature (usually 43°C or 110°F) and the inner specimen cylinder volume allowed to fill with the warm bath water. Specimens were then connected to the pressure sources by means of a fitting at one end plug. Specimens were supported only at this connection end thus allowing the can body specimen to freely swell, bend or twist in any direction (axially, radially, torsionally) once pressurized. Most tests were performed at 0.7 MPa gauge (100 psig). Volume swell was then mesured as a function of time under these conditions of temperature and pressure. The method used to determine volume swell used photography, and measurements made from photographs which recorded dimensional change in the diameter and length of the specimen as compared to its initial dimensions at various times. This proved to be a simple technique: A camera was mounted above the immersed specimens and at various times a photograph was taken. Prints were developed, specimen dimensions were measured, volume swell was calculated and finally volume swell was plotted as a function of time. Specimens were generally held at this pressure and temperature for a four hour period.

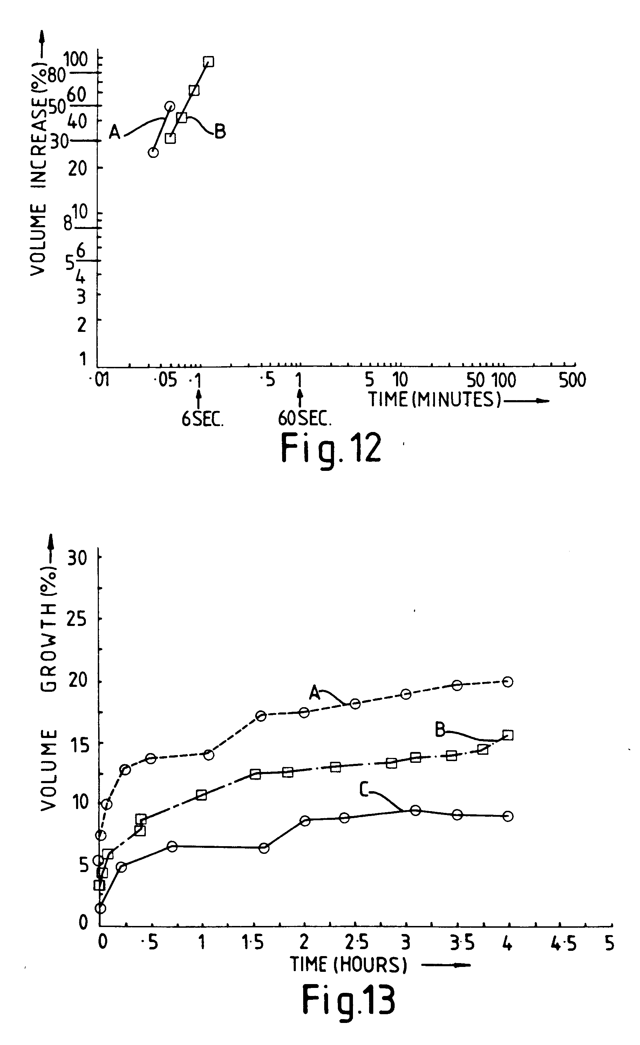

Figure 12 shows the volume precent growth for high modulus, low yield strength biaxially oriented polypropylene material wrapped convolutely onto the 0.33 mm (13 mil) polypropylene core. At film thicknesses of 0.2 or 0.25 mm (8 or 10 mils), Curves A and B respectively of Fig 12, of this pressure sensitive adhesive coated strength wrap material and pressurization to 0.7 MPa gauge (100 psig) at 38°C (100°F), these examples show a volume swell of over 100% in less than 10 seconds, followed by bursting. This is clearly unacceptable performance for a carbonated beverage container and shows that biaxially oriented film as employed previously is unsatisfactory. For example, a 0.33 mm (13 mil) thick polypropylene bladder which as been wrapped with ten layers of Hercules T-503 film after eight (8) seconds pressurization at 0.7 MPa gauge, 38°C (100 psig, 110°F) has a volume swell, calculated from photographic dimensions, of 112 percent.

Figure 13 shows the volume percent growth for improved creep resistant, high yield strength biaxially oriented polypropylene (material 3 in Table 1 above) as a function of wrapping angle (50 degrees versus 70 degrees) and as a function of plus/minus ply layer wrapping (balanced) versus unidirectional wrapping. Twelve layers of 25 μm (one-mil) thickness pressure sensitive adhesive coated film were used for all of three examples wrapped onto a 0.33 mm (13 mil) wall thickness polypropylene core. The can body wall thickness is about 0.84 mm (33 mils) for these examples. Curve A of Fig 13 illustrates 50° balanced wrapping, Curve B illustrates 70° unidirectional wrapping and Curve C illustrates 70° balanced wrapping. The two "balanced" examples have two-3 ply layers at the plus angle specified (either plus 50 or plus 70 degrees) and two-3 ply layers at the minus angle specified (either minus 50 or minus 70 degrees). As disclosed in Table 1 reference Figure 7 this improved creep resistant biaxially oriented polypropylene has a combination of high modulus (about 3400 MPa or 500,000 psi) and high yield strength (greater than 55 MPa 8,000 psi) in at least one orientation direction, in this case the machine direction (M.D.). The results in this figure are shown as percent volume growth versus time in hours at 0.7 MPa gauge and 43°C (100 psig and 110°F).

From these results it is shown that plus/minus wrapping is essential to minimizing volume swell. For example, note the four-hour results comparing the 70 degree wrapped structures, balanced (C) and one direction (B) wrapping, wherein the one direction wrapped construction (B) exhibits about twice the volume swell shown for the balanced (plus/minus) wrapped construction (C).

Secondly, we note the importance of wrapping angle chosen for balanced, plus/minus constructions: Clearly, for this strength wrap material an angle of plus/minus 70 degrees (C) is advantageous versus the angle of plus/minus 50 degrees (A). A reduction of volume swell equal to about 50%, from about 20% measured volume swell as compared with about 10% volume swell, is found for the 70 degree angle of wrapping (C) versus the 50 degree angle of wrapping (A) for these plus/minus examples.

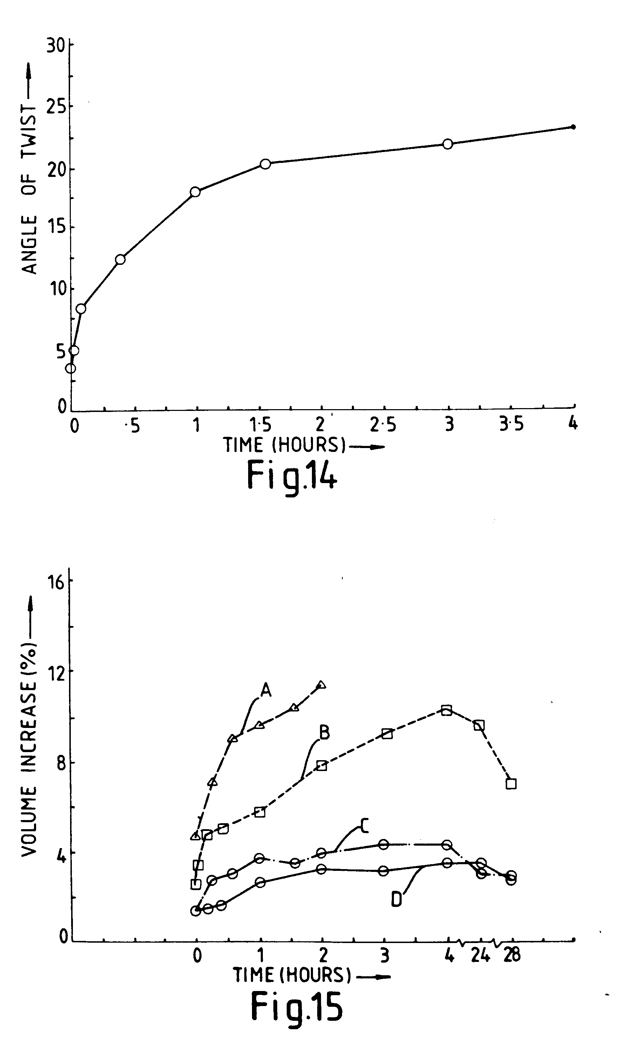

The achievement of thin wall can bodies for pressurized beverage containers necessarily relies on a combination of specific strength wrap material properties as we have disclosed wherein such properties are most efficiently expressed via cross-plying of layers in plus/minus configuration, and so doing at an angle of wrap that substantially minimizes volume swell of a thin wall container under pressure. Cross-plying of layers in a plus/minus configuration also prevents torquing and twisting of the can body. Figure 14 illustrates the rotational angle of twist found for the unidirectional wrapped body configuration (curve B, Figure 13) as previously discussed. Balanced configurations, plus/minus wrapped can bodies, do not exhibit twisting. Twisting or torquing is not acceptable for a carbonated beverage can as it causes distortion of graphics, decoration, printing or labeling on the can body surface. The present invention prevents this distortion.

Figure 15 shows volume swell test results for monoaxially oriented polypropylene strength wrap materials as disclosed in Table 1 (and see Figure 4) for materials 1 and 2. Testing conditions were altered slightly to better reflect a maximum temperature and pressure likely to be found when a metal end seamed beverage can top will buckle (namely 0.59 MPa gauge and 41°C or 85 psig and 105°F as shown in Figure 1) and to allow time to simulate cooling of the can to room temperature/corresponding pressure, followed by a simulation of refrigeration/corresponding pressure in monitoring volume swell and recoverable volume swell. This series of tests was run sequentially with 4 hours at 0.59 MPa gauge and 41.°C (85 psig/105°F) followed by 20 hours at 0.4 MPa gauge/26°C (60 psig/78°F) followed by 4 hours at 0.3 MPa gauge/13°C (40 psig/55°F). This series of tests are shown by curves A (material 1) and B (material 2) in Figure 15. A second series of tests were performed wherein only the pressure was changed according to this sequence while the water bath temperature was maintained at 26°C (78°F) throughout. This series of tests are shown by curves C (material 1) and D (material 2) in Figure 15.

These monoaxially oriented polypropylene strength wrap materials were 90 or 100 $\mu$m (3.5 or 4.0 mils) in thickness. As disclosed, either material has very high modulus and very high yield strength (Table 1 and Figure 4). Only two layers of these materials were used, thus the total strength wrap material thickness for these test specimens was 180 or 200 $\mu$m (7 or 8 mils) respectively. Layers were applied at plus/minus wrap angles of about ±55 degrees to form the cross-plied configuration. Layers were bonded to the 0.33 mm (13 mil) core and to each other with about a 25 $\mu$m (one-mil) (dry) pressure sensitive adhesive painted on from solvent. For these examples, the total can body wall is 0.56 to 0.58 mm (22 to 23 mils), including a 0.33 mm (13 mil) thickness core, 0.18 or 0.2 mm (7 or 8 mils) of strength wrapped sheet material and 50 $\mu$m (2 mils) of pressure sensitive adhesive. Both materials 1 and 2 showed excellent resistance to volume swell in the room temperature test, with material 2 (Curve D) showing less than about 4% volume swell and somewhat better performance than material 1 (Curve C). For the hot temperature test, material 2 (Curve B) showed a significant advantage in volume swell resistance as compared to material 1 (Curve A). Material 2 is integrally cap coated as disclosed in Table 1 and a significant contribution to reduced volume swell may be attributed to transverse direction (T.D.) sheet properties not found in material 1. We point out that data for material 1 at hot temperature conditions ends at two hours into the test sequence. A tear in the clamped area caused a split in the outer wrap layer that led to an early failure of this specimen. While data are not shown for unidirectional wrapped specimens of these materials, 3 to 4 plies of these materials wrapped without cross-plying result in rapid splitting of the film layers, torquing, twisting and subsequent failure.

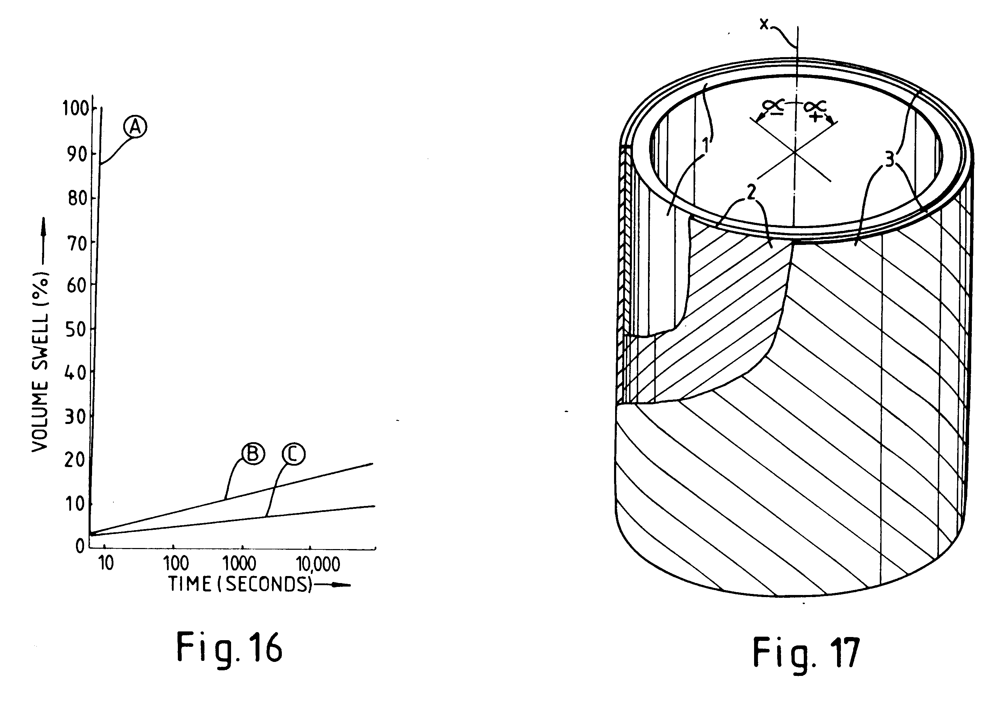

Figure 16 summarises results for Figures 12, 13 and 15 wherein curve A represents the results obtained with 0.25 mm (10 mils) of convolute wrapped low yield strength biaxially oriented polypropylene film (material 4 of Table 1), curve B represents the results obtained with 0.3 mm (12 mils) of cross-lied (at 70 degree plus/minus angles) improved creep resistance, high yield strength biaxially oriented polypropylene film (material 3 of Table 1) and curve C represents the results obtained with 0.2 mm (8 mils) of cross-plied (at 55 degree plus/minus angles) very high yield strength, very high modulus monoaxially oriented polypropylene sheet (material 2 of Table 1). The samples are compared for volume swell at conditions where pressure is greater than 0.6 MPa gauge (85 psig) and temperature is greater than 41°C (105°F).

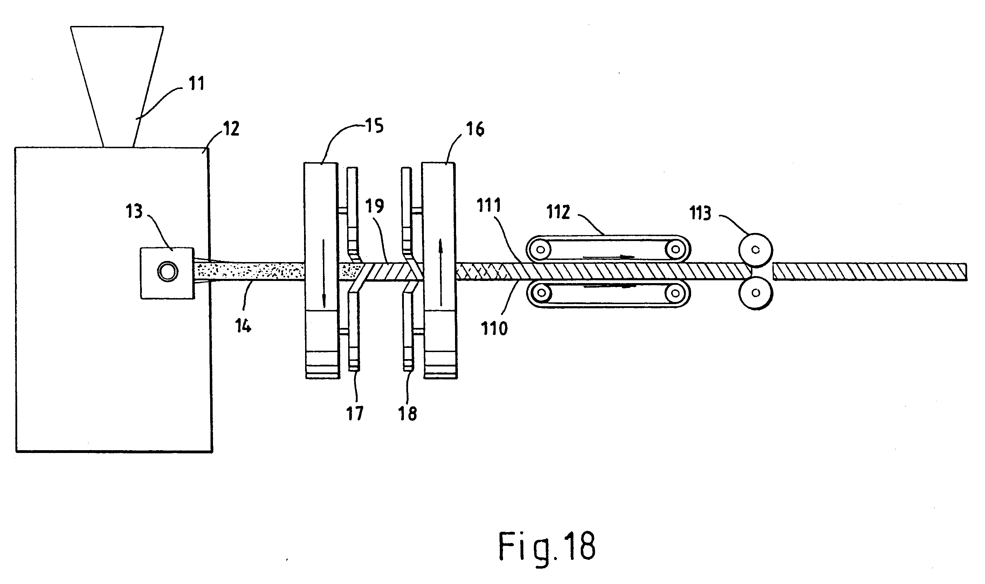

Figure 17 shows a simple and illustrative can body with core material 1 and two layers 2 and 3 of strength wrap material. The core axis is shown by line X and the winding angles of layers 2 and 3 with respect to the core axis are shown by $\alpha_+$ and $\alpha_-$.

Figure 18 is a schematic diagram, in partial cross-section, of apparatus that can be employed in the continuous manufacture of beverage can bodies in accordance with the invention. Thermoplastic material is supplied to hopper 11 of an extruder 12 and is extruded through die 13 in the form of a cylindrical extrudate 14, which provides the core of the can bodies. Oppositely rotating heads 15 and 16, and associated supply reels 17 and 18, apply cross-plies in a plus/minus configuration of layers of high strength polyolefin wrap material to the extrudate 14. The wrapped core 111 is drawn through the apparatus by puller 112 and cut into lengths appropriate for the desired can bodies by cutting device 113.

**Claims**

1. A beverage can for carbonated beverages which comprises a can body comprising a core of a thermoplastic material (1), at least one layer of barrier material, and bonded thereto a first layer (2) of a film or sheet of a polyolefin material which has been stretched, said layer being wrapped around said core at a positive angle relative to the longitudinal axis of said core, and can ends attached to said can body, characterised in that the can body is no more than 2 mm (80 mils) thick, that the first layer (2) has been monoaxially or biaxially stretched to a tensile yield strength of at least 55 MPa (8000 psi) in a given direction and elastic modulus of at least 2760 MPa (400,000 psi) in a given direction and that the can body comprises at least one further layer (3) of stretched polyolefin material which is wrapped around said core at a substantially corresponding negative angle.

2. A beverage can according to Claim 1, wherein said core (1) is made of a polyolefin.

3. A beverage can according to Claim 2, wherein said core (1) is made of extruded polypropylene or of coextruded polypropylene layer, tie layer and barrier layer.

4. A beverage can according to Claim 1, 2 or 3 wherein said layers (2 and 3) have been biaxially stretched and are wrapped round the core at positive and negative angles between 60 degrees and 80 degrees to the core axis.

5. A beverage can according to Claim 1, 2 or 3 wherein said layers (2 and 3) have been monoaxially stretched and are wrapped around the core at positive and negative angles between 50 degrees and 60 degrees to the core axis.

6. A beverage can according to any one of the preceding claims wherein said core (1) and at least two layers of polyolefin material (2 and 3) are bonded together by an adhesive containing a homopolymer or copolymer of butene-1.

7. A beverage can according to Claim 6 wherein said adhesive is present as a layer on at least one side of each of said layers of polyolefin material.

8. A beverage can according to any one of the preceding claims wherein said at least two layers are of polypropylene.

**Revendications**

1. Une boîte pour boissons gazeuses comprenant un corps de boîte dont l'épaisseur ne dépasse pas 2 mm (80 mils) comprenant une âme en matériau thermoplastique (1), au moins une couche de matériau de barrière, et collée à celles-ci, une première couche (2) d'un film ou d'une feuille en matériau polyoléfine ayant été étiré monoaxialement ou biaxialement jusqu'à l'obtention d'une limite élastique à la traction d'au moins 55 MPa (8000 psi) dans un sens donné et d'un module élastique d'au moins 2760 MPa (400000 psi) dans un sens donné, ladite couche étant enveloppée autour de ladite âme selon un angle positif par rapport à l'axe longitudinal de ladite âme, et les extrémités de boîte étant fixées audit corps de boîte, caractérisée en ce que l'épaisseur du corps de boîte ne dépasse pas 2 mm (80 mils), en ce que la première couche (2) a été étirée monoaxialement ou biaxialement jusqu'à l'obtention d'une limite élastique à la traction d'au moins 55 MPa (8000 psi) dans un sens donné et d'un module élastique d'au moins 2760 MPa (400000 psi) dans un sens donné, et en ce que le corps de boîte comprend au moins une couche supplémentaire (3) en matériau polyoléfine étiré qui est enroulé autour de ladite âme selon un angle négatif substantiellement correspondant.

2. Une boîte pour boissons selon la Revendication 1, dans laquelle ladite âme est fabriquée en une polyoléfine.

3. Une boîte pour boissons selon la Revendication 2, dans laquelle ladite âme (1) est composée d'une couche de polypropylène extrudé ou de polypropylène coextrudé, d'une couche de liaison et d'une couche de barrière.

4. Une boîte pour boissons selon la Revendication 1, 2 ou 3 dans laquelle lesdites couches (2 et 3) ont été étirées biaxialement et sont enveloppées autour de l'âme selon des angles positifs et négatifs compris entre 60 degrés et 80 degrés par rapport à l'axe de l'âme.

**5.** Une boîte pour boissons selon la Revendication 1, 2 ou 3 dans laquelle lesdites couches (2 et 3) ont été étirées monoaxialement et sont enveloppées autour de l'âme selon des angles positifs et négatifs compris entre 50 degrés et 60 degrés par rapport à l'axe de l'âme.

**6.** Une boîte pour boissons selon l'une des revendications précédentes, dans laquelle ladite âme (1) et au moins deux couches de matériau polyoléfine (2 et 3) sont liées ensemble par un adhésif contenant un homopolymère ou un copolymère de butène-1.

**7.** Une boîte pour boissons selon la Revendication 6, dans laquelle ledit adhésif est présent sous forme d'une couche sur au moins un côté de chacune desdites couches de matériau polyoléfine.

**8.** Une boîte pour boissons selon l'une des revendications précédentes, dans laquelle au moins deux desdites couches sont en polypropylène.

## Patentansprüche

**1.** Getränkedose für kohlensäurehältige Getränke, welche einen Dosenkörper umfaßt, der einen Kern (1) aus einem thermoplastischen Material, wenigstens eine Schicht aus einem Sperrmaterial, und damit verbunden eine erste Schicht (2) aus einem Film oder einer Bahn aus einem Polyolefinmaterial aufweist, welcher bzw. welche letztgenannte gestreckt worden ist, wobei diese Schicht um den Kern unter einem positiven Winkel in bezug auf die Längsachse des Kerns gewickelt worden ist; und welche an diesem Dosenkörper befestigte Dosenendteile umfaßt, dadurch gekennzeichnet, daß der Dosenkörper nicht dicker als 2 mm (80 Mil) ist, daß die erste Schicht (2) monoaxial oder biaxial bis auf eine technische Streckgrenze von wenigstens 55 MPa (8.000 psi) in einer gegebenen Richtung und auf einen Elastizitätsmodul von wenigstens 2.760 MPa (400.000 psi) in einer gegebenen Richtung gestreckt worden ist und daß der Dosenkörper wenigstens eine weitere Schicht (3) aus gerecktem Polyolefinmaterial aufweist, welche um den Kern unter einem im wesentlichen entsprechenden, negativen Winkel gewickelt worden ist.

**2.** Getränkedose nach Anspruch 1, wobei der Kern (1) aus Polyolefin angefertigt ist.

**3.** Getränkedose nach Anspruch 2, wobei der Kern (1) aus extrudiertem Polypropylen oder aus einer gemeinsam extrudierten Polypropylenschicht, einer Bindeschicht und einer Sperrschicht angefertigt ist.

**4.** Getränkedose nach Anspruch 1, 2 oder 3, wobei die Lagen (2 und 3) biaxial gereckt worden sind und um den Kern unter positiven und negativen Winkeln zwischen 60° und 80° zur Kernachse herumgewickelt worden sind.

**5.** Getränkedose nach Anspruch 1, 2 oder 3, wobei die Lagen (2 und 3) monoaxial gereckt worden sind, und um den Kern unter positiven und negativen Winkeln zwischen 50° und 60° zur Kernachse herumgewickelt worden sind.

**6.** Getränkedose nach einem der Ansprüche 1 bis 5, wobei der Kern (1) und wenigstens zwei Lagen aus Polyolefinmaterial (2 und 3) miteinander durch einen Klebstoff verbunden sind, welcher ein Homopolymer oder ein Copolymer von 1-Buten enthält.

**7.** Getränkedose nach Anspruch 6, wobei der Klebstoff auf wenigstens einer Seite von jeder der Lagen des Polyolefinmaterials als eine Schicht vorliegt.

**8.** Getränkedose nach einem der Ansprüche 1 bis 7, wobei diese wenigstens zwei Lagen aus Polypropylen bestehen.

Fig.1

Fig.2

EP 0 317 675 B1

Fig. 3

Fig. 4

VOLUME SWELL $\frac{\Delta V}{V}$ (%) ⟶

t (mm) ⟶

Fig. 5

$E_3$

$E_2$

$E_1$

STRESS ⟶

STRAIN ⟶

Fig. 6

SH  B2  B1  A  B1  B2  C  D  M

Fig.7

Fig.8

9A 9B 9C 9D

Fig.9

10A 10B 10C

90°

55°

Fig.10

11A 11B 11C 11D

Fig.11

18

Fig.12

Fig.13

Fig.14

Fig.15

Fig.16

Fig.17

Fig.18